# EUROPEAN PATENT SPECIFICATION

(11) **EP 3 964 014 B1**
(45) Date of publication and mention of the grant of the patent: **06.12.2023**
(21) Application number: 20724218.1
(22) Date of filing: 01.05.2020
(51) Int. Cl.: H04W 74/08, H04W 36/00

(54) **TWO-STEP CONTENTION-FREE RANDOM ACCESS**
ZWEISTUFIGER KONFLIKTFREIER ZUFALLSZUGRIFF
ACCÈS ALÉATOIRE SANS CONTENTION EN DEUX ÉTAPES

(30) Priority: 02.05.2019 US 201962842510 P
(43) Date of publication of application: 09.03.2022
(73) Proprietor: Telefonaktiebolaget LM Ericsson (publ), 164 83 Stockholm (SE)
(72) Inventor: RUNE, Johan, 181 29 Lidingö (SE); DA SILVA, Icaro, 170 77 Solna (SE)
(74) Representative: Haseltine Lake Kempner LLP
(86) International application number: PCT/IB2020/054125
(87) International publication number: WO 2020/222181

(56) References cited:
- WO-A1-2018/175809
- ZTE CORPORATION ET AL: "2-step RACH vs RACH-less handover", 3GPP DRAFT; R2-1904247 2-STEP RACH VS RACH-LESS HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Xi'an, China; 20190408 - 20190412 6 April 2019 (2019-04-06), XP051701555, Retrieved from the Internet: URL:http://www.3gpp.org/ftp/Meetings%5F3GP P%5FSYNC/RAN2/Docs/R2%2D1904247%2Ezip [retrieved on 2019-04-06]
- MOTOROLA MOBILITY ET AL: "NR mobility enhancement", 3GPP DRAFT; R1-1904937 NR MOBILITY ENHANCEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Xi'an, China; 20190403 - 20190412 7 April 2019 (2019-04-07), XP051700064, Retrieved from the Internet: URL:http://www.3gpp.org/ftp/Meetings%5F3GP P%5FSYNC/RAN1/Docs/R1%2D1904937%2Ezip [retrieved on 2019-04-07]

## Description

This application claims priority to U.S. Application No. 62/842,510, filed May 2, 2019.

### TECHNICAL FIELD

The present disclosure relates generally to handover procedures for wireless communication networks and, more particularly, to a two-step, contention-free random access procedure for use during handovers.

### BACKGROUND

Two-step random access is being considered for NR networks. Essentially, the two-step random access procedure lumps Message 1 (Msg1) and Message 3 (Msg3) of the standard four-step random access procedure into a single message, labeled Message A (MsgA) in a first step of the random access procedure. MsgA thus contains a random access preamble transmitted on Physical Random Access Channel (PRACH) transmission resources combined with a transmission of the remainder of MsgA (corresponding to Msg3) on PUSCH transmission resources. The transmission of MsgA in the first step is followed by a second, concluding step comprising the transmission of a message, labeled Message B (MsgB) that combines Message 2 (Msg2) and Message 4 (Msg4) of the standard for-step random access procedure.

The two-step random access procedure has similar properties as RACH-less handover in that the payload (which may be user plane data or the content of an Radio Resource Control (RRC) message) can be transmitted in a first step (i.e., without having to wait a typical Round Trip Time (RTT) after transmission of a random access preamble and reception of a random access response (RAR)). Hence, handover with two-step random access applied in the target cell is an option, along with RACH-less handover, when the goal is to reduce the handover interruption. Two-step random access also has the advantage that it contains a preamble transmission, which allows the base station 110 (e.g., gNB or eNB) to estimate a proper timing advance (TA) for the UE 120. It may also be advantageous in other use cases where a fast setup is also important to better utilize network resources such as in SCG addition, SCG changes, SCell addition, etc.

The two-step random access can be a contention-based random access (CBRA) or a contention-free random access (CFRA). Because CFRA is the commonly preferred random access variant when a UE accesses the target cell in conjunction with a handover or SCG change (or SCG addition, or SCell addition, etc.), support for CFRA is needed to make two-step random access an attractive option when compared to RACH-less handover to be implemented by a network vendor. In addition, even if a UE were to use a contention-free random access preamble (i.e., unique preamble), as is the case in a CFRA procedure, this would only ensure that the UE can avoid preamble collisions, but the PUSCH part of MsgA could still have the risk of collision with MsgA transmissions from other UEs 120.

3GPP TSG RAN WG2 Meeting #105bis, R2-1904247, "2-step RACH vs RACH-less handover" relates to the possibility of adopting 2-step RACH for the objective of mobility interruption reduction, and gives some initial comparison of 2-step RACH and RACH-less handover.

### SUMMARY

The present disclosure relates generally to a two-step, contention-free random access procedure. According to one aspect of the disclosure, a user equipment (UE) is provided with a dedicated preamble for use in a two-step random access procedure, as well as dedicated, contention-free PUSCH transmission resources for the PUSCH part of MsgA. The latter may be provided in the form of a dedicated preamble to PUSCH transmission resource mapping, or in the form of a plain PUSCH transmission resource allocation/indication. In either case, Physical Uplink shared Channel (PUSCH) transmission resources may be indicated in relation to the time (and possibly frequency) relative to the resource used for the dedicated preamble transmission.

A first aspect of the disclosure comprises methods implemented by a user equipment in a wireless communication network. In one embodiment, the method comprises transmitting, to a base station, a dedicated random access preamble on a random access channel as a first part of a random access message. The method further comprises transmitting, to the base station, a second part of the random access message using dedicated resources on an uplink shared channel. The dedicated resources are associated with the dedicated random access preamble.

A second aspect of the disclosure comprises methods implemented by a base station in a wireless communication network of supporting random access. In one embodiment the method comprises transmitting, to a user equipment, configuration information including an indication of a dedicated preamble for a contention-free random access. The dedicated preamble comprises a first part of a random access message to be transmitted by the UE. and is associated with dedicated resources on a shared uplink channel for transmission of a second part of the random access message.

A third aspect of the disclosure comprises a user equipment for a wireless communication network. The user equipment is configured to transmit, to a base station, a dedicated random access preamble on a random access channel as a first part of a random access message. The user equipment is further configured to transmit, to the base station, a second part of the random access message using dedicated resources on an uplink shared channel. The dedicated resources are associated with the dedicated random access preamble.

A fourth aspect of the disclosure comprises a base station configured to transmit, to a user equipment, configuration information including an indication of a dedicated preamble for a contention-free random access. The dedicated preamble comprises a first part of a random access message to be transmitted by the UE and is associated with dedicated resources on a shared uplink channel for transmission of a second part of the random access message.

### BRIEF DESCRIPTION OF THE DRAWINGS

Figure 1 illustrates an exemplary wireless communication network according to an embodiment.
Figure 2 is a signaling flow diagram illustrating an exemplary handover procedure that supports two-step, contention-free RA.
Figure 3 illustrates a method implemented by a base station of configuring a UE for two-step, contention-free random access.
Figure 4 illustrates a method implemented by a UE of two-step, contention-free random access.
Figure 5 illustrates an exemplary base station configured to support two-step, contention-free random access.
Figure 6 illustrates an exemplary UE configured to perform two-step, contention-free random access.
Figure 7 illustrates another exemplary base station configured to support two-step, contention-free random access.
Figure 8 illustrates another exemplary UE configured to perform wo-step, contention-free random access.
Figure 9 illustrates an exemplary wireless network according to an embodiment.
Figure 10 illustrates an exemplary UE according to an embodiment.
Figure 11 illustrates an exemplary virtualization environment according to an embodiment.
Figure 12 illustrates an exemplary telecommunication network connected via an intermediate network to a host computer according to an embodiment.
Figure 13 illustrates an exemplary host computer communicating via a base station with a user equipment over a partially wireless connection according to an embodiment.
Figures 14-17 illustrate an exemplary method implemented in a communication system, according to an embodiment.

### DETAILED DESCRIPTION

Referring now to the drawings, an exemplary embodiment of the disclosure will be described in the context of a Fifth Generation (5G) wireless communication network, also known as New Radio (NR) network. Those skilled in the art will appreciate that the methods and apparatus herein described are not limited to use in 5G or NR networks, but may also be used in wireless communication networks 100 operating according to other standards to support contention-free random access procedures.

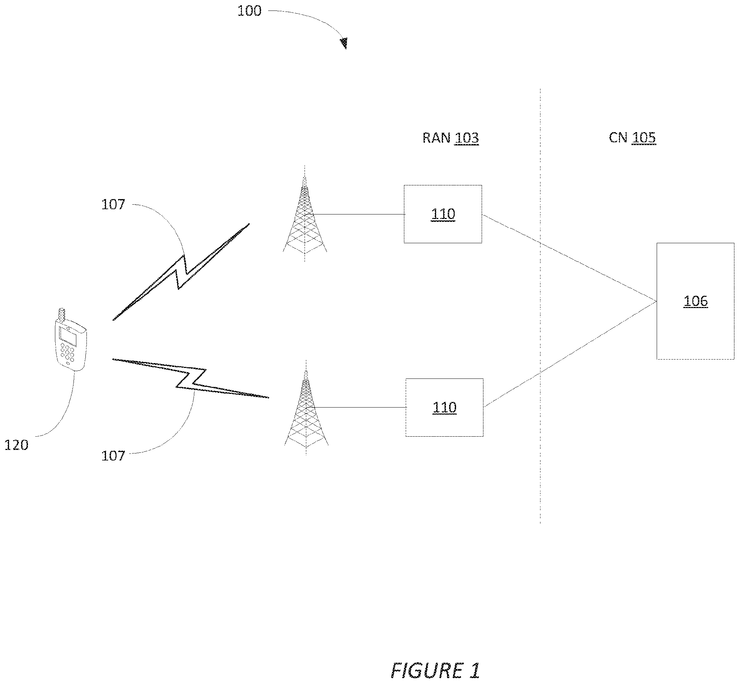

Figure 1 illustrates a wireless communication network 100 according to the 5G standard currently being developed by Third Generation Partnership Project (3GPP). The wireless communication network 10 comprises a radio access network (RAN) 103 and a core network (CN) 105. A UE 120 communicates with one or multiple base stations 110 in the RAN 103 using radio connections 107. The base stations 110 are connected to a network node 106 in the CN 105.

For Fourth Generation (4G) network, as known as Long Term Evolution (LTE) networks, such as specified in 3GPP TS 36.300 and related specifications, the base stations 110 corresponds typically to an Evolved NodeB (eNB) and the network node 106 corresponds typically to either a Mobility Management Entity (MME) and/or a Serving Gateway (SGW). The eNBs are part of the radio access network 103, which in this case is the Evolved Universal Terrestrial Radio Access Network (E-UTRAN), while the MME and SGW are both part of the Evolved Packet Core (EPC).

For Fifth Generation (5G) networks, also known as New Radio (NR), such as specified in 3GPP TS 38.300 and related specifications, the base stations 110 corresponds typically to a 5G NodeB (gNB) and the network node 106 corresponds typically to either a Access and Mobility Management Function (AMF) and/or a User Plane Function (UPF). The gNBs are part of the radio access network 103, which in this case is the Next Generation (NG) RAN (NG-RAN), while the AMF and UPF are both part of the 5G Core Network (5GC).

The UE 120 may comprise any type of equipment capable of communicating with the base stations 110 over a wireless communication channel. For example, the UEs 120 may comprise cellular telephones, smart phones, laptop computers, notebook computers, tablets, machine-to-machine (M2M) devices (also known as machine type communication (MTC) devices), embedded devices, wireless sensors, or other types of wireless end user devices capable of communicating over wireless communication networks 10.

In conventional networks, a random access (RA) procedure is used by the UE 120 to access the network 100. During the RA procedure, the UE 120 transmits a random access preamble on a Random Access Channel (RACH), also referred to as Msg1, or Physical Random Access Channel (PRACH) and the base station 110 responds with a random access response (RAR) message, also referred to as Msg2, providing the UE 120 with an uplink (UL) grant. RACH-less handover (and RACH-less Secondary Cell Group (SCG) change) have been specified for LTE, as part of 3GPP Release 14, in order to decrease the interruption time at handover and SCG change, respectively. The RACH-less handover procedure means that no Msg1 transmission, i.e., RA preamble (also called RACH preamble or PRACH preamble) transmission by the UE 120, or Msg2 transmission, i.e., network responding with RAR message, are performed when accessing the target cell during the handover.

The random access preamble does not enable the network to uniquely identify the UE 120. It is possible that multiple UEs attempted to make a random access with the same random access preamble on the same RACH Through Msg2, the network provides the UE 120 with an UL grant for transmission of more information to the network, in a so called Msg3 (e.g., Connection Request message). The additional information enables the network to resolve any conflict that may exist and the network answers Msg3 with a random access contention resolution message, also referred to as Msg4, indicating the UE 120 that won the contention.

Msg1 is, among others, used by the network to determine a so-called Timing Advance (TA) value that the UE 120 should use in its uplink transmissions in order for them to reach the network's antenna at the right point in time, i.e., a point in time related to when the UE 120 receives downlink transmissions from the cell. This TA value is mainly dependent on the distance between the UE 120 and the base station/antenna, and the initial value to use is signaled to the UE 120 in Msg2, based on an estimate of the time of arrival of Msg1 (i.e., the PRACH preamble).

At a RACH-less handover/SCG change, the UE 120 is instead provided with a TA value prior to accessing the target cell. In order for Msg3 to reach the target base station 110 at the right point in time, the correct TA value to use for the UE 120 in the target cell needs to be known in advance. The use of RACH-less handover/SCG change is thus restricted to cases where:
- the target cell is known to have the same TA value as another cell where the UE 120 already has a connection and thus a known TA value (such as a PCell, PSCell or SCell) when the handover is initiated; or
- the target cell is known to have a TA value=0, i.e., it is a small cell.

Two-step random access is a modification of the regular four-step random access procedure and is being considered for NR networks. Essentially, the two-step random access procedure lumps Message 1 (Msg1) and Message 3 (Msg3) of the standard four-step procedure into a message, labeled Message A (MsgA) in a first step of the random access procedure. MsgA thus contains a random access preamble transmitted on Physical Random Access Channel (PRACH) transmission resources combined with a transmission of the remainder of MsgA (corresponding to Msg3) on PUSCH transmission resources. An association is made between the random access preamble and the PUSCH transmission resources to be used for the PUSCH part of MsgA. Such preamble-PUSCH resource associations could potentially be one-to-many, one-to-one or even one-to-many. The transmission of MsgA in the first step is followed by a second, concluding step comprising the transmission of a message, labeled Message B (MsgB), that combines Msg2 and Msg4.

The two-step random access procedure has similar properties as RACH-less handover in that the payload (which may be user plane data or the content of an Radio Resource Control (RRC) message) can be transmitted in a first step (i.e., without having to wait a typical Round Trip Time (RTT) after transmission of a random access preamble and reception of a random access response (RAR)). Hence, handover with two-step random access applied in the target cell is an option, along with RACH-less handover, when the goal is to reduce the handover interruption. Two-step random access also has the advantage that it contains a preamble transmission, which allows the base station 110 (e.g., gNB or eNB) to estimate a proper TA for the UE 120. It may also be advantageous in other use cases where a fast setup is also important to better utilize network resources such as in SCG addition, SCG changes, SCell addition, etc.

The two-step random access can be a contention-based random access (CBRA) or a contention-free random access (CFRA). Because CFRA is the commonly preferred random access variant when a UE 120 accesses the target cell in conjunction with a handover or SCG change (or SCG addition, or SCell addition, etc.), support for CFRA is needed to make two-step random access an attractive option when compared to RACH-less handover to be implemented by a network vendor. In addition, even if a UE 120 were to use a contention-free random access preamble (i.e., unique preamble), as is the case in a CFRA procedure, this would only ensure that the UE 120 can avoid preamble collisions, but the PUSCH part of MsgA could still have the risk of collision with MsgA transmissions from other UEs 120.

According to one aspect of the disclosure, the UE 120 is provided with a dedicated preamble, also referred to as a CFRA preamble, for use in a two-step random access procedure, as well as dedicated (i.e., contention-free) PUSCH transmission resources for collision-free transmission of the PUSCH part of MsgA. The latter may be provided in the form of a dedicated preamble to PUSCH transmission resource mapping, or in the form of a plain PUSCH transmission resource allocation/indication. In either case, PUSCH transmission resources may be indicated in relation to the time (and possibly frequency) relative to the resource used for the CFRA preamble transmission. The dedicated preamble is a preamble assigned to be used exclusively by a specific UE 120 for a limited time and that cannot be used by any other UE 120 in the same cell as long as it is assigned to the specific UE. Similarly, the dedicated resources are resources allocated for the exclusive use of a specific UE and which cannot be used by any other UE. The dedicated resources comprise time and frequency resources of the shared uplink channel used for uplink transmissions.

The dedicated preamble and PUSCH part of MsgA are transmitted in a first step of the two-step random access procedure.

To enable two-step, contention-free random access, the network needs to:
a) configure the UE 120 to use the two-step RA procedure when accessing the target cell;
b) configure the UE 120 with a dedicated preamble for the two-step random access procedure; and
c) configure dedicated, i.e. contention-free, PUSCH transmission resources for the UE 120 for transmission of the PUSCH part of MsgA.

In one embodiment, the network sends UE-specific configuration information that indicates a dedicated preamble assigned to the UE 120 combined with a parameter indicating that the dedicated preamble should be used for two-step random access in the target cell. Alternatively, the indication of two-step random access may be implicit in the CFRA preamble, where, for example, the range from which the CFRA preamble is chosen (e.g., the random access preamble root index or range of root indexes), implicitly indicates that the CFRA preamble is to be used in conjunction with a two-step random access procedure. In some cases, the target cell only has PRACH resources allocated for two-step random access (i.e., four-step random access is not be used in the target cell). In this case, no explicit indication would be needed in the UE-specific configuration, e.g. for the handover or SCG change.

For handover or SCG change, the UE-specific configuration is preferably included in the *HandoverCommand* message, which is prepared by the RRC entity in the target base station 110 to be carried to the source base station 110 in an internode (e.g. XnAP or X2AP) message called *Handover Request Acknowledge.* The *HandoverCommand*message contains RRC or Radio Resource Management (RRM) configuration that the UE 120 should apply in the target cell. This configuration is forwarded by the source base station 110 to the UE 120 in the *RRCReconfiguration* message (in NR) or *RRCConnectionReconfiguration* message (in LTE), which triggers/orders the UE 120 to execute the handover (or SCG change).

To avoid collision on the PUSCH transmission resources where the PUSCH part of MsgA is transmitted, dedicated PUSCH transmission resources are needed for the UE 120. Unlike random access preambles, PUSCH transmissions are not orthogonal and will interfere negatively with each other in the event of a collision. In one embodiment, following the principle of preamble to PUSCH transmission resource association, the UE's dedicated PUSCH transmission resources can be configured and provided in the form of a dedicated preamble to PUSCH transmission resource mapping (where the preamble is the UE's dedicated preamble). In another embodiment, the dedicated PUSCH transmission resources can be allocated to the UE 120 without any explicit mapping to the dedicated preamble. The dedicated preamble to PUSCH transmission mapping is preferably configured and provided to the UE 120 via the *HandoverCommand* message, or, alternatively, as provided as part of System Information (SI). In another embodiment, the dedicated PUSCH transmission resources, without explicit mapping to the UE's dedicated preamble, is configured and provided to the UE 120 via the *HandoverCommand* message, but configuration in this case via SI would not be suitable. The dedicated PUSCH transmission resources (with or without mapping to the dedicated preamble) can be configured in terms of time and frequency resources, which optionally could be defined relative to the PRACH resources used for transmission of the CFRA preamble.

In addition to the PUSCH transmission resource, e.g., time and frequency resource allocation, the configuration of dedicated PUSCH transmission resources could optionally comprise further transmission related aspects, such as Modulation and Coding Scheme (MCS), transmit power configuration (e.g. ,TPC command), frequency hopping configuration (e.g., a frequency hopping flag), Channel State Information (CSI) request, DMRS antenna port and/or a Demodulation Reference Signal (DMRS) sequence initialization value.

Optionally, the source base station 110 could include an indication of the UE's support (or lack of support) for two-step random access in the *HandoverPreparationlnformation* message. The *HandoverPreparationInformation* message is prepared by the RRC entity in the source base station 110 and transferred to the target base station 110 in an inter-node 110 (e.g. XnAP or X2AP) message called *Handover Request.*

The configuration of the two-step, contention-free random access can, in some embodiments, be provided only for a subset of beams (e.g., indicated as Synchronization Signal Blocks (SSBs) and/or Channel State Information Reference Signals (CSI-RSs) in the target cell that may be selected, for example, a subset of available SSB resources or CSI-RS resources. For example, in the case of a handover, the UE 120 sends measurement reports to the source base station 110 (e.g., gNB or eNB) including beam measurements for a neighboring cell. During handover preparation, the source base station 110 provides these beam measurements to the target base station 110 and, based on these measurements, the target base station 110 may allocate resources for CFRA. The network may decide to configure only a subset of the CFRA resources for two-step random access. The CFRA resources available for two-step random access may be associated with a subset of SSBs in the target cell or with a subset of CSI-RSs. Using the handover use case described above as an example, the UE 120 receives the random access configuration and selects a beam in the target cell, e.g., by selecting a SSB in the target cell.

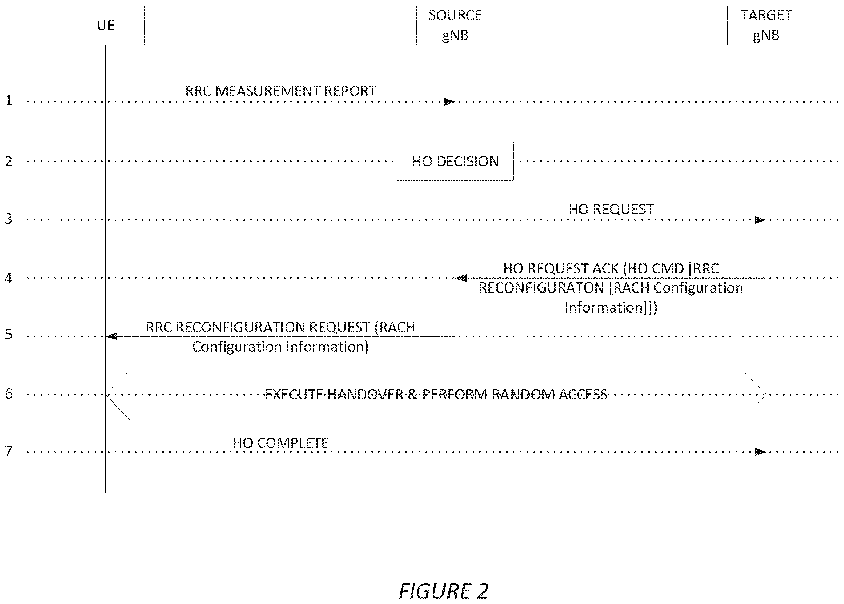

Figure 2 is a signaling flow diagram illustrating an exemplary handover procedure that supports two-step, contention-free RA. The UE 120 sends a RRC measurement report to the source base station 110 including measurements taken on reference signals from neighboring base stations 110 (1). Based on the RRC measurement report from the UE 120, the source base station 110 determines that a handover is needed and sends a Handover Request (HO Request) to a target base station 110 (2, 3). In answer to the Handover Request, the target base station 110 returns a Handover Command (HO Command) in a Handover Request Acknowledge (HO Request Ack) message (4). The Handover Command contains RRC configuration information that includes RACH configuration information for two-step RA that the UE 120 should apply in the target cell. The HO Command is an inter-node RRC message included in the form of a target-to-source transparent container in the Handover Request Acknowledge message. The HO Command contains the dedicated RACH preamble to use in the target cell. Additionally, the HO Command may contain mapping information for a dedicated preamble to PUSCH transmission resource mapping. Alternatively, the dedicated preamble to PUSCH transmission resource mapping could be provided as part of SI or be specified by standard. In another embodiment, no explicit preamble dedicated resource mapping is used. Instead, the target base station 110 configures dedicated PUSCH resources and the configured dedicated PUSCH resources are included in the HO Command. The base station 110 forwards the RRC configuration information received from the target cell to the UE 120 in a RRC Reconfiguration Request message *(RRCReconfiguration)* or RRC Connection Reconfiguration Request message *(RRCConnectionReconfiguration)*(5). The RRC configuration information contains the (re)configuration from the target node to be applied in the target cell. The RRCReconfiguration/ RRCConnectionReconfiguration message triggers the UE 120 to execute the handover and perform a random access in the target cell (6). After accessing the target cell, the UE 120 sends a Handover Complete message to the target base station 110 (7) to complete the handover.

In addition to the handover use case, the two-step, contention-free random access can be configured for other control plane/RRC procedures such as:
- Transition from inactive to connected mode. In this case, the UE 120 is in connected mode when it receives an RRC release-like message (e.g., *RRCRelease* with a suspend configuration) configuring two-step, contention-free random access;
- Transition from idle to connected mode. In this case, the UE 120 is in connected mode when it receives an RRC release-like message (e.g. *RRCRelease without a suspend configuration)* configuring two-step, contention-free random access;
- SCG addition, SCell addition or any form of multi-connectivity or carrier aggregation;
- Beam failure recovery.

This list of procedures where two-step, contention-free random access can be configured is not intended to be exhaustive but simply to illustrate the range of possibilities.

In the examples above, SSBs have been used as examples of reference signals that are measured by the UE 120 and that map to RACH configurations. However, that is not a limiting factor. For example, there may be a mapping between CSI-RS resources and PRACH resources mapped to PUSCH resources, for the purpose of 2-step random access.

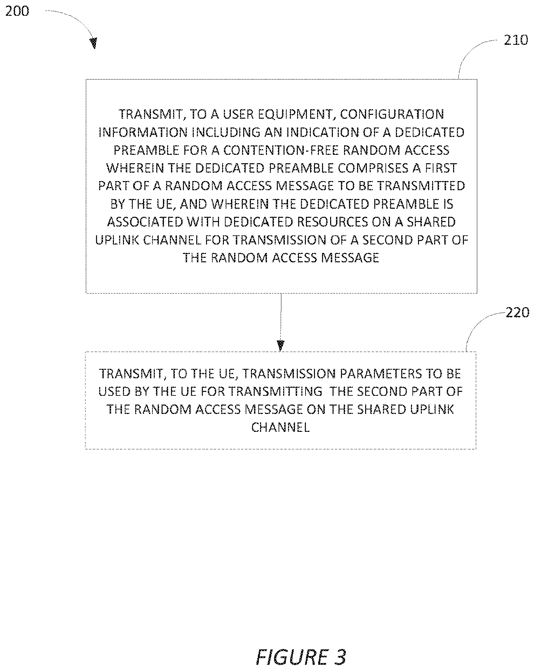

Figure 3 illustrates an exemplary method 200 performed by a base station 110 according to an embodiment. The base station 110 transmits, to a UE 120, configuration information including an indication of a dedicated preamble for a contention-free random access (block 210). The dedicated preamble comprises a first part of a random access message (e.g., MsgA) to be transmitted by the UE 120 and is associated with dedicated resources on a shared uplink channel for transmission of a second part of the random access message. Optionally, the base station 110 further transmits, to the UE 120, transmission parameters to be used by the UE 120 for transmitting the second part of the random access message on the shared uplink channel (block 220).

In some embodiments of the method 200, the configuration information further comprises a resource allocation for the dedicated resources. In some embodiments, the resource allocation is transmitted separately from the indication of the dedicated preamble. In other embodiments, the resource allocation is transmitted together (e.g., in the same message) with the preamble as part of the configuration information.

In some embodiments of the method 200, the configuration information further comprises mapping information for a dedicated preamble to resource mapping associating the dedicated preamble with the dedicated resources on the uplink shared channel. In some embodiments, the mapping information is transmitted separately from the indication of the dedicated preamble. For example, the mapping information can be transmitted separately as part of system information. In other embodiments, the mapping information is transmitted together (e.g., in the same message) with the preamble as part of the configuration information.

In some embodiments of the method 200, the configuration information further comprises an indication to use a two-step random access procedure. In some embodiments, the indication to use a two-step random access procedure is an explicit indication. In other embodiments, the indication to use a two-step random access procedure is indicated implicitly by the indication of the dedicated preamble dedicated preamble and/or dedicated PUSCH resources in RACH configuration information.

In some embodiments of the method 200, at least a portion of the configuration information is transmitted to the UE 120 in a handover command. In other embodiments, at least a portion of the configuration information is transmitted to the UE 120 in a radio resource control message.

In some embodiments, the method 200 further comprises transmitting, to the UE 120, transmission parameters for use in transmitting the second part of the random access message on the uplink shared channel.

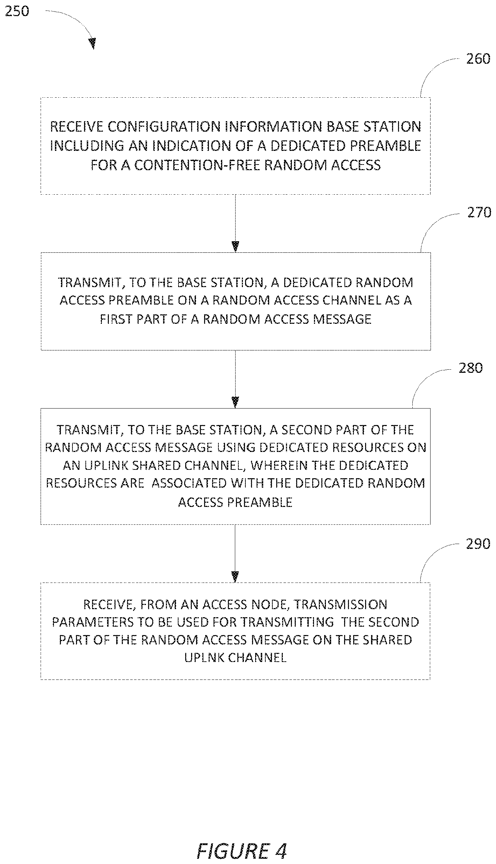

Figure 4 illustrates an exemplary method 250 implemented by a UE 120 of performing a two-step, contention-free random access. The UE 120 optionally receives configuration information from a base station 110 including an indication of a dedicated preamble for a contention-free random access (block 260). The UE transmits, to the base station 110, a dedicated random access preamble on a random access channel as a first part of a random access message (block 270). The UE further transmits, to the base station 110, a second part of the random access message using dedicated resources on an uplink shared channel associated with the dedicated random access preamble (block 280). In some embodiments, the UE 120 optionally receives, from the base station 110, transmission parameters for transmitting the second part of the random access message on an uplink shared channel (block 290).

In some embodiments of the method 250, the configuration information includes an indication of a dedicated preamble for a contention-free random access.

In some embodiments of the method 250, the configuration information further comprises a resource allocation for the dedicated resources. In some embodiments, the resource allocation is received separately from the indication of the dedicated preamble. In other embodiments, the resource allocation is received together (e.g., in the same message) with the preamble as part of the configuration information.

In some embodiments of the method 250, the configuration information further comprises mapping information for a dedicated preamble to resource mapping associating the dedicated preamble with the dedicated resources on the uplink shared channel. In some embodiments, the mapping information is received separately from the indication of the dedicated preamble. For example, the mapping information can be received separately as part of system information.

In some embodiments of the method 250, the configuration information further comprises an indication to use a two-step random access procedure. In some embodiments, the indication to use a two-step random access procedure is an explicit indication. In other embodiments, the indication to use a two-step random access procedure is indicated implicitly by the indication of the dedicated preamble dedicated preamble.

In some embodiments of the method 250, at least a portion of the configuration information is received by the UE 120 in a handover command. In other embodiments, at least a portion of the configuration information is received by the UE 120 in a radio resource control message.

In some embodiments, the method 250 further comprises receiving, from the base station, transmission parameters for use in transmitting the second part of the random access message on the uplink shared channel.

An apparatus can perform any of the methods herein described by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include Digital Signal Processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

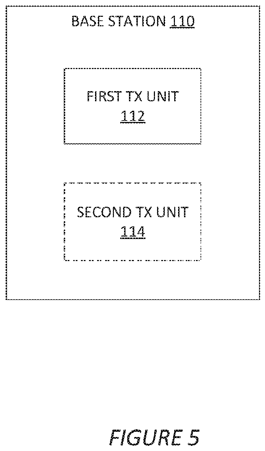

Figure 5 illustrates a base station 110 in accordance with one or more embodiments. The base station 110 comprises a first transmitting unit 112 and an optional second transmitting unit 114. The first and second transmitting units 112, 114 can be implemented by hardware and/or by software code that is executed by a processor or processing circuit. The first transmitting unit 112 is configured to transmit, to a UE 120, configuration information including an indication of a dedicated preamble for a contention-free random access The second transmitting unit 114, when present is configured to send transmission parameters to the UE 120 for use in transmitting the second part of the random access message on the uplink shared channel.

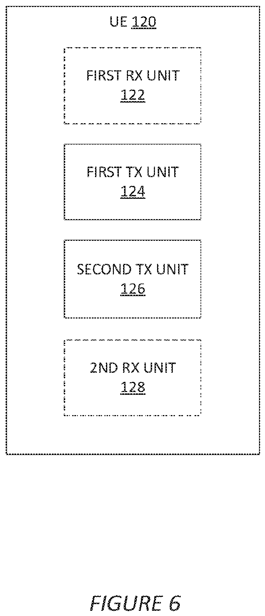

Figure 6 illustrates a UE 120 in accordance with one or more embodiments. The UE 120 comprises an optional first receiving (RX) unit 122, a first transmitting (TX) unit 124, a second transmitting (TX) unit126 and an optional second receiving unit 128. The various units 122-128 can be implemented by hardware and/or by software code that is executed by one or more processors or processing circuits. The first receiving unit 122, when present, is configured to receive, from a base station in the wireless communication network, configuration information including an indication of the dedicated preamble. The first transmitting unit 124 is configured transmit, to the base station, a dedicated random access preamble on a random access channel as a first part of a random access message. The second transmitting 126 is configured to transmit, to the base station, a second part of the random access message using dedicated resources on an uplink shared channel. the dedicated resources are associated with the dedicated random access preamble. The second receiving unit 128, when present, is configured to receive, from an base station in the wireless communication network, transmission parameters for transmitting the second part of the random access message on the uplink shared channel.

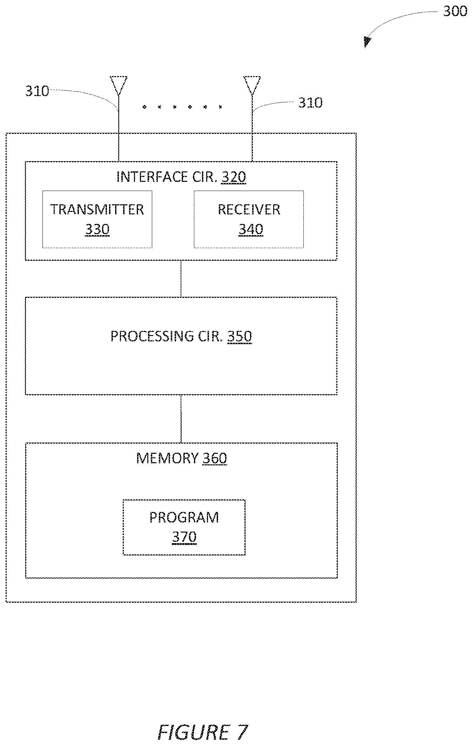

Figure 7 illustrates a base station 300 according to another embodiment. The base station 300 comprises one or multiple antenna 310, communication circuitry 320, processing circuitry 330, and memory 340.

The communication circuitry 320 is coupled to the antennas 310 and comprises the radio frequency (RF) circuitry (e.g., transmitter 330 and receiver 340) needed for transmitting and receiving signals over a wireless communication channel. The transmitter 330 and receiver 340 may, for example, be configured to operate according to the NR standard.

The processing circuitry 350 controls the overall operation of the base station 300 and processes the signals transmitted to or received by the base station 300. Such processing includes coding and modulation of transmitted data signals, and the demodulation and decoding of received data signals. The processing circuitry 350 may comprise one or more microprocessors, hardware, firmware, or a combination thereof. The processing circuitry is configured to perform the random access procedures as herein described.

Memory 360 comprises both volatile and non-volatile memory for storing computer program code and data needed by the processing circuitry 350 for operation. Memory 360 may comprise any tangible, non-transitory computer-readable storage medium for storing data including electronic, magnetic, optical, electromagnetic, or semiconductor data storage. Memory 360 stores a computer program 370 comprising executable instructions that configure the processing circuitry 350 to implement the methods 100 according to Figure 3 as described herein. A computer program 370 in this regard may comprise one or more code modules corresponding to the means or units described above. In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, computer program 350 for configuring the processing circuitry 350 as herein described may be stored in a removable memory, such as a portable compact disc, portable digital video disc, or other removable media. The computer program 370 may also be embodied in a carrier such as an electronic signal, optical signal, radio signal, or computer readable storage medium.

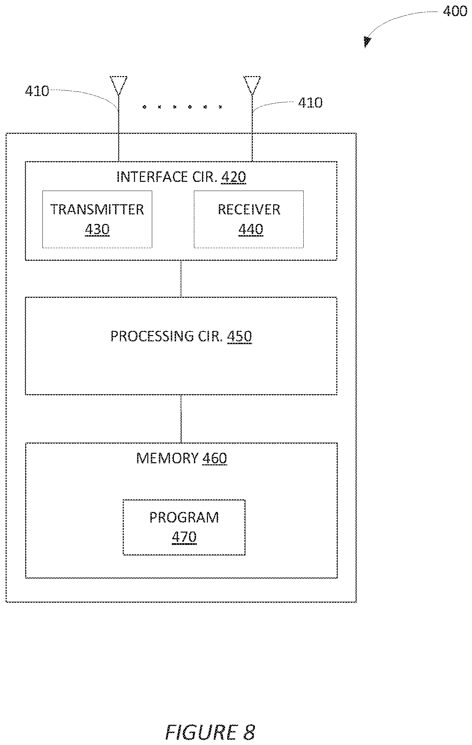

Figure 8 illustrates a UE 400 according to another embodiment. The UE 400 comprises one or more antennas 410, communication circuitry 420, processing circuitry 450, and memory 440.

The communication circuitry 420 is coupled to the antennas 410 and comprises the radio frequency (RF) circuitry (e.g., transmitter 430 and receiver 440) needed for transmitting and receiving signals over a wireless communication channel. The transmitter 430 and receiver 440 may, for example, be configured to operate according to the NR standard.

The processing circuitry 450 controls the overall operation of the base station 300 and processes the signals transmitted to or received by the base station 300. Such processing includes coding and modulation of transmitted data signals, and the demodulation and decoding of received data signals. The processing circuitry 450 may comprise one or more microprocessors, hardware, firmware, or a combination thereof. The processing circuitry is configured to perform the random access procedures as herein described.

Memory 460 comprises both volatile and non-volatile memory for storing computer program code and data needed by the processing circuitry 470 for operation. Memory 460 may comprise any tangible, non-transitory computer-readable storage medium for storing data including electronic, magnetic, optical, electromagnetic, or semiconductor data storage. Memory 460 stores a computer program 470 comprising executable instructions that configure the processing circuitry 450 to implement the methods 100 according to Figure 4 as described herein. A computer program 470 in this regard may comprise one or more code modules corresponding to the means or units described above. In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, computer program 470 for configuring the processing circuitry 450 as herein described may be stored in a removable memory, such as a portable compact disc, portable digital video disc, or other removable media. The computer program 470 may also be embodied in a carrier such as an electronic signal, optical signal, radio signal, or computer readable storage medium.

Those skilled in the art will also appreciate that embodiments herein further include corresponding computer programs. A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

Additional embodiments will now be described. At least some of these embodiments may be described as applicable in certain contexts and/or wireless network types for illustrative purposes, but the embodiments are similarly applicable in other contexts and/or wireless network types not explicitly described.

### Additional embodiments

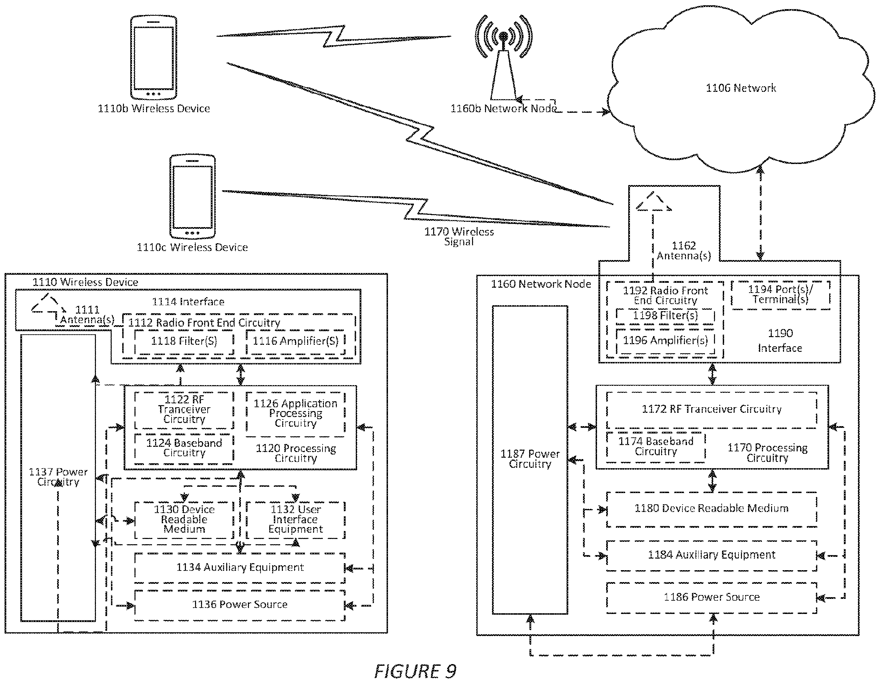

Although the subject matter described herein may be implemented in any appropriate type of system using any suitable components, the embodiments disclosed herein are described in relation to a wireless network, such as the example wireless network illustrated in Figure 9. For simplicity, the wireless network of Figure 9 only depicts network 1106, network nodes 1160 and 1160b, and WDs 1110, 1110b, and 1110c. In practice, a wireless network may further include any additional elements suitable to support communication between wireless devices or between a wireless device and another communication device, such as a landline telephone, a service provider, or any other network node or end device. Of the illustrated components, network node 1160 and wireless device (WD) 1110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), Narrowband Internet of Things (NB-IoT), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1160 and WD 1110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), and base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 9, network node 1160 includes processing circuitry 1170, device readable medium 1180, interface 1190, auxiliary equipment 1184, power source 1186, power circuitry 1187, and antenna 1162. Although network node 1160 illustrated in the example wireless network of Figure 9 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1160 are depicted as single boxes located within a larger box, or nested within multiple boxes, in practice, a network node may comprise multiple different physical components that make up a single illustrated component (e.g., device readable medium 1180 may comprise multiple separate hard drives as well as multiple RAM modules).

Similarly, network node 1160 may be composed of multiple physically separate components (e.g., a NodeB component and a RNC component, or a BTS component and a BSC component, etc.), which may each have their own respective components. In certain scenarios in which network node 1160 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, network node 1160 may be configured to support multiple radio access technologies (RATs). In such embodiments, some components may be duplicated (e.g., separate device readable medium 1180 for the different RATs) and some components may be reused (e.g., the same antenna 1162 may be shared by the RATs). Network node 1160 may also include multiple sets of the various illustrated components for different wireless technologies integrated into network node 1160, such as, for example, GSM, WCDMA, LTE, NR, WiFi, or Bluetooth wireless technologies. These wireless technologies may be integrated into the same or different chip or set of chips and other components within network node 1160.

Processing circuitry 1170 is configured to perform any determining, calculating, or similar operations (e.g., certain obtaining operations) described herein as being provided by a network node. These operations performed by processing circuitry 1170 may include processing information obtained by processing circuitry 1170 by, for example, converting the obtained information into other information, comparing the obtained information or converted information to information stored in the network node, and/or performing one or more operations based on the obtained information or converted information, and as a result of said processing making a determination.

Processing circuitry 1170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1160 components, such as device readable medium 1180, network node 1160 functionality. For example, processing circuitry 1170 may execute instructions stored in device readable medium 1180 or in memory within processing circuitry 1170. Such functionality may include providing any of the various wireless features, functions, or benefits discussed herein. In some embodiments, processing circuitry 1170 may include a system on a chip (SOC).

In some embodiments, processing circuitry 1170 may include one or more of radio frequency (RF) transceiver circuitry 1172 and baseband processing circuitry 1174. In some embodiments, radio frequency (RF) transceiver circuitry 1172 and baseband processing circuitry 1174 may be on separate chips (or sets of chips), boards, or units, such as radio units and digital units. In alternative embodiments, part or all of RF transceiver circuitry 1172 and baseband processing circuitry 1174 may be on the same chip or set of chips, boards, or units.

In certain embodiments, some or all of the functionality described herein as being provided by a network node, base station, eNB or other such network device may be performed by processing circuitry 1170 executing instructions stored on device readable medium 1180 or memory within processing circuitry 1170. In alternative embodiments, some or all of the functionality may be provided by processing circuitry 1170 without executing instructions stored on a separate or discrete device readable medium, such as in a hard-wired manner. In any of those embodiments, whether executing instructions stored on a device readable storage medium or not, processing circuitry 1170 can be configured to perform the described functionality. The benefits provided by such functionality are not limited to processing circuitry 1170 alone or to other components of network node 1160 but are enjoyed by network node 1160 as a whole, and/or by end users and the wireless network generally.

Device readable medium 1180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1170. Device readable medium 1180 may store any suitable instructions, data or information, including a computer program, software, an application including one or more of logic, rules, code, tables, etc. and/or other instructions capable of being executed by processing circuitry 1170 and, utilized by network node 1160. Device readable medium 1180 may be used to store any calculations made by processing circuitry 1170 and/or any data received via interface 1190. In some embodiments, processing circuitry 1170 and device readable medium 1180 may be considered to be integrated.

Interface 1190 is used in the wired or wireless communication of signaling and/or data between network node 1160, network 1106, and/or WDs 1110. As illustrated, interface 1190 comprises port(s)/terminal(s) 1194 to send and receive data, for example to and from network 1106 over a wired connection. Interface 1190 also includes radio front end circuitry 1192 that may be coupled to, or in certain embodiments a part of, antenna 1162. Radio front end circuitry 1192 comprises filters 1198 and amplifiers 1196. Radio front end circuitry 1192 may be connected to antenna 1162 and processing circuitry 1170. Radio front end circuitry may be configured to condition signals communicated between antenna 1162 and processing circuitry 1170. Radio front end circuitry 1192 may receive digital data that is to be sent out to other network nodes or WDs via a wireless connection. Radio front end circuitry 1192 may convert the digital data into a radio signal having the appropriate channel and bandwidth parameters using a combination of filters 1198 and/or amplifiers 1196. The radio signal may then be transmitted via antenna 1162. Similarly, when receiving data, antenna 1162 may collect radio signals which are then converted into digital data by radio front end circuitry 1192. The digital data may be passed to processing circuitry 1170. In other embodiments, the interface may comprise different components and/or different combinations of components.

In certain alternative embodiments, network node 1160 may not include separate radio front end circuitry 1192, instead, processing circuitry 1170 may comprise radio front end circuitry and may be connected to antenna 1162 without separate radio front end circuitry 1192. Similarly, in some embodiments, all or some of RF transceiver circuitry 1172 may be considered a part of interface 1190. In still other embodiments, interface 1190 may include one or more ports or terminals 1194, radio front end circuitry 1192, and RF transceiver circuitry 1172, as part of a radio unit (not shown), and interface 1190 may communicate with baseband processing circuitry 1174, which is part of a digital unit (not shown).

Antenna 1162 may include one or more antennas, or antenna arrays, configured to send and/or receive wireless signals. Antenna 1162 may be coupled to radio front end circuitry 1190 and may be any type of antenna capable of transmitting and receiving data and/or signals wirelessly. In some embodiments, antenna 1162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1162 may be separate from network node 1160 and may be connectable to network node 1160 through an interface or port.

Antenna 1162, interface 1190, and/or processing circuitry 1170 may be configured to perform any receiving operations and/or certain obtaining operations described herein as being performed by a network node. Any information, data and/or signals may be received from a wireless device, another network node and/or any other network equipment. Similarly, antenna 1162, interface 1190, and/or processing circuitry 1170 may be configured to perform any transmitting operations described herein as being performed by a network node. Any information, data and/or signals may be transmitted to a wireless device, another network node and/or any other network equipment.

Power circuitry 1187 may comprise, or be coupled to, power management circuitry and is configured to supply the components of network node 1160 with power for performing the functionality described herein. Power circuitry 1187 may receive power from power source 1186. Power source 1186 and/or power circuitry 1187 may be configured to provide power to the various components of network node 1160 in a form suitable for the respective components (e.g., at a voltage and current level needed for each respective component). Power source 1186 may either be included in, or external to, power circuitry 1187 and/or network node 1160. For example, network node 1160 may be connectable to an external power source (e.g., an electricity outlet) via an input circuitry or interface such as an electrical cable, whereby the external power source supplies power to power circuitry 1187. As a further example, power source 1186 may comprise a source of power in the form of a battery or battery pack which is connected to, or integrated in, power circuitry 1187. The battery may provide backup power should the external power source fail. Other types of power sources, such as photovoltaic devices, may also be used.

Alternative embodiments of network node 1160 may include additional components beyond those shown in Figure 9 that may be responsible for providing certain aspects of the network node's functionality, including any of the functionality described herein and/or any functionality necessary to support the subject matter described herein. For example, network node 1160 may include user interface equipment to allow input of information into network node 1160 and to allow output of information from network node 1160. This may allow a user to perform diagnostic, maintenance, repair, and other administrative functions for network node 1160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g., refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1110 includes antenna 1111, interface 1114, processing circuitry 1120, device readable medium 1130, user interface equipment 1132, auxiliary equipment 1134, power source 1136 and power circuitry 1137. WD 1110 may include multiple sets of one or more of the illustrated components for different wireless technologies supported by WD 1110, such as, for example, GSM, WCDMA, LTE, NR, WiFi, WiMAX, NB-IoT, or Bluetooth wireless technologies, just to mention a few. These wireless technologies may be integrated into the same or different chips or set of chips as other components within WD 1110.

Antenna 1111 may include one or more antennas or antenna arrays, configured to send and/or receive wireless signals, and is connected to interface 1114. In certain alternative embodiments, antenna 1111 may be separate from WD 1110 and be connectable to WD 1110 through an interface or port. Antenna 1111, interface 1114, and/or processing circuitry 1120 may be configured to perform any receiving or transmitting operations described herein as being performed by a WD. Any information, data and/or signals may be received from a network node and/or another WD. In some embodiments, radio front end circuitry and/or antenna 1111 may be considered an interface.

As illustrated, interface 1114 comprises radio front end circuitry 1112 and antenna 1111. Radio front end circuitry 1112 comprise one or more filters 1118 and amplifiers 1116. Radio front end circuitry 1114 is connected to antenna 1111 and processing circuitry 1120, and is configured to condition signals communicated between antenna 1111 and processing circuitry 1120. Radio front end circuitry 1112 may be coupled to or a part of antenna 1111. In some embodiments, WD 1110 may not include separate radio front end circuitry 1112; rather, processing circuitry 1120 may comprise radio front end circuitry and may be connected to antenna 1111. Similarly, in some embodiments, some or all of RF transceiver circuitry 1122 may be considered a part of interface 1114. Radio front end circuitry 1112 may receive digital data that is to be sent out to other network nodes or WDs via a wireless connection. Radio front end circuitry 1112 may convert the digital data into a radio signal having the appropriate channel and bandwidth parameters using a combination of filters 1118 and/or amplifiers 1116. The radio signal may then be transmitted via antenna 1111. Similarly, when receiving data, antenna 1111 may collect radio signals which are then converted into digital data by radio front end circuitry 1112. The digital data may be passed to processing circuitry 1120. In other embodiments, the interface may comprise different components and/or different combinations of components.

Processing circuitry 1120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1110 components, such as device readable medium 1130, WD 1110 functionality. Such functionality may include providing any of the various wireless features or benefits discussed herein. For example, processing circuitry 1120 may execute instructions stored in device readable medium 1130 or in memory within processing circuitry 1120 to provide the functionality disclosed herein.

As illustrated, processing circuitry 1120 includes one or more of RF transceiver circuitry 1122, baseband processing circuitry 1124, and application processing circuitry 1126. In other embodiments, the processing circuitry may comprise different components and/or different combinations of components. In certain embodiments processing circuitry 1120 of WD 1110 may comprise a SOC. In some embodiments, RF transceiver circuitry 1122, baseband processing circuitry 1124, and application processing circuitry 1126 may be on separate chips or sets of chips. In alternative embodiments, part or all of baseband processing circuitry 1124 and application processing circuitry 1126 may be combined into one chip or set of chips, and RF transceiver circuitry 1122 may be on a separate chip or set of chips. In still alternative embodiments, part or all of RF transceiver circuitry 1122 and baseband processing circuitry 1124 may be on the same chip or set of chips, and application processing circuitry 1126 may be on a separate chip or set of chips. In yet other alternative embodiments, part or all of RF transceiver circuitry 1122, baseband processing circuitry 1124, and application processing circuitry 1126 may be combined in the same chip or set of chips. In some embodiments, RF transceiver circuitry 1122 may be a part of interface 1114. RF transceiver circuitry 1122 may condition RF signals for processing circuitry 1120.

In certain embodiments, some or all of the functionality described herein as being performed by a WD may be provided by processing circuitry 1120 executing instructions stored on device readable medium 1130, which in certain embodiments may be a computer-readable storage medium. In alternative embodiments, some or all of the functionality may be provided by processing circuitry 1120 without executing instructions stored on a separate or discrete device readable storage medium, such as in a hard-wired manner. In any of those particular embodiments, whether executing instructions stored on a device readable storage medium or not, processing circuitry 1120 can be configured to perform the described functionality. The benefits provided by such functionality are not limited to processing circuitry 1120 alone or to other components of WD 1110, but are enjoyed by WD 1110 as a whole, and/or by end users and the wireless network generally.

Processing circuitry 1120 may be configured to perform any determining, calculating, or similar operations (e.g., certain obtaining operations) described herein as being performed by a WD. These operations, as performed by processing circuitry 1120, may include processing information obtained by processing circuitry 1120 by, for example, converting the obtained information into other information, comparing the obtained information or converted information to information stored by WD 1110, and/or performing one or more operations based on the obtained information or converted information, and as a result of said processing making a determination.

Device readable medium 1130 may be operable to store a computer program, software, an application including one or more of logic, rules, code, tables, etc. and/or other instructions capable of being executed by processing circuitry 1120. Device readable medium 1130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1120. In some embodiments, processing circuitry 1120 and device readable medium 1130 may be considered to be integrated.

User interface equipment 1132 may provide components that allow for a human user to interact with WD 1110. Such interaction may be of many forms, such as visual, audial, tactile, etc. User interface equipment 1132 may be operable to produce output to the user and to allow the user to provide input to WD 1110. The type of interaction may vary depending on the type of user interface equipment 1132 installed in WD 1110. For example, if WD 1110 is a smart phone, the interaction may be via a touch screen; if WD 1110 is a smart meter, the interaction may be through a screen that provides usage (e.g., the number of gallons used) or a speaker that provides an audible alert (e.g., if smoke is detected). User interface equipment 1132 may include input interfaces, devices and circuits, and output interfaces, devices and circuits. User interface equipment 1132 is configured to allow input of information into WD 1110 and is connected to processing circuitry 1120 to allow processing circuitry 1120 to process the input information. User interface equipment 1132 may include, for example, a microphone, a proximity or other sensor, keys/buttons, a touch display, one or more cameras, a USB port, or other input circuitry. User interface equipment 1132 is also configured to allow output of information from WD 1110, and to allow processing circuitry 1120 to output information from WD 1110. User interface equipment 1132 may include, for example, a speaker, a display, vibrating circuitry, a USB port, a headphone interface, or other output circuitry. Using one or more input and output interfaces, devices, and circuits, of user interface equipment 1132, WD 1110 may communicate with end users and/or the wireless network and allow them to benefit from the functionality described herein.

Auxiliary equipment 1134 is operable to provide more specific functionality which may not be generally performed by WDs. This may comprise specialized sensors for doing measurements for various purposes, interfaces for additional types of communication such as wired communications etc. The inclusion and type of components of auxiliary equipment 1134 may vary depending on the embodiment and/or scenario.

Power source 1136 may, in some embodiments, be in the form of a battery or battery pack. Other types of power sources, such as an external power source (e.g., an electricity outlet), photovoltaic devices or power cells, may also be used. WD 1110 may further comprise power circuitry 1137 for delivering power from power source 1136 to the various parts of WD 1110 which need power from power source 1136 to carry out any functionality described or indicated herein. Power circuitry 1137 may in certain embodiments comprise power management circuitry. Power circuitry 1137 may additionally or alternatively be operable to receive power from an external power source; in which case WD 1110 may be connectable to the external power source (such as an electricity outlet) via input circuitry or an interface such as an electrical power cable. Power circuitry 1137 may also in certain embodiments be operable to deliver power from an external power source to power source 1136. This may be, for example, for the charging of power source 1136. Power circuitry 1137 may perform any formatting, converting, or other modification to the power from power source 1136 to make the power suitable for the respective components of WD 1110 to which power is supplied.

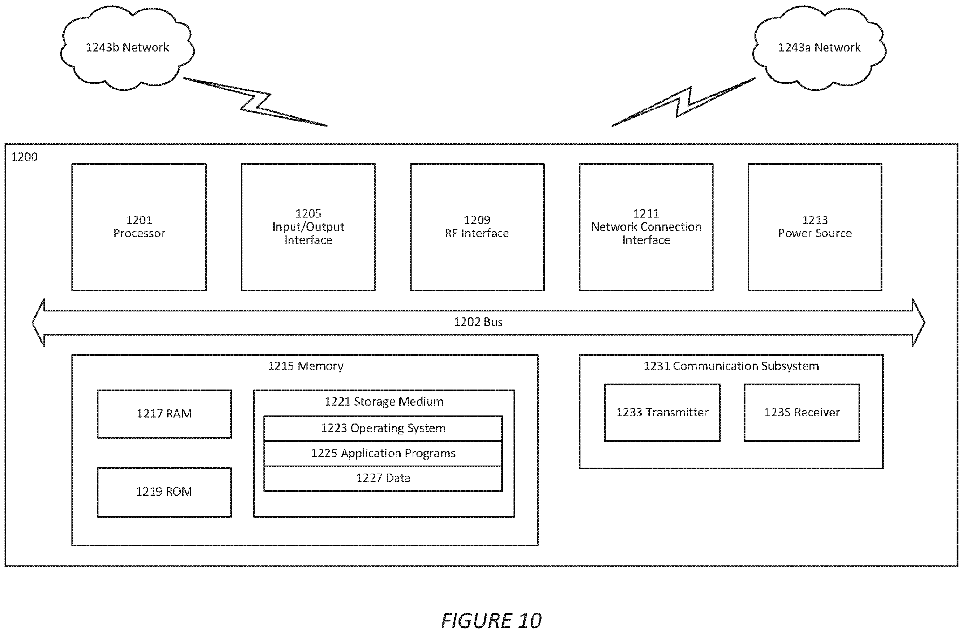

Figure 10 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 1200 may be any UE identified by the 3rd Generation Partnership Project (3GPP), including a NB-IoT UE, a machine type communication (MTC) UE, and/or an enhanced MTC (eMTC) UE. UE 1200, as illustrated in Figure 10, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although Figure 10 is a UE, the components discussed herein are equally applicable to a WD, and vice-versa.

In Figure 10, UE 1200 includes processing circuitry 1201 that is operatively coupled to input/output interface 1205, radio frequency (RF) interface 1209, network connection interface 1211, memory 1215 including random access memory (RAM) 1217, read-only memory (ROM) 1219, and storage medium 1221 or the like, communication subsystem 1231, power source 1233, and/or any other component, or any combination thereof. Storage medium 1221 includes operating system 1223, application program 1225, and data 1227. In other embodiments, storage medium 1221 may include other similar types of information. Certain UEs may utilize all of the components shown in Figure 10, or only a subset of the components. The level of integration between the components may vary from one UE to another UE. Further, certain UEs may contain multiple instances of a component, such as multiple processors, memories, transceivers, transmitters, receivers, etc.

In Figure 10, processing circuitry 1201 may be configured to process computer instructions and data. Processing circuitry 1201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1201 may include two central processing units (CPUs). Data may be information in a form suitable for use by a computer.

In the depicted embodiment, input/output interface 1205 may be configured to provide a communication interface to an input device, output device, or input and output device. UE 1200 may be configured to use an output device via input/output interface 1205. An output device may use the same type of interface port as an input device. For example, a USB port may be used to provide input to and output from UE 1200. The output device may be a speaker, a sound card, a video card, a display, a monitor, a printer, an actuator, an emitter, a smartcard, another output device, or any combination thereof. UE 1200 may be configured to use an input device via input/output interface 1205 to allow a user to capture information into UE 1200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 10, RF interface 1209 may be configured to provide a communication interface to RF components such as a transmitter, a receiver, and an antenna. Network connection interface 1211 may be configured to provide a communication interface to network 1243a. Network 1243a may encompass wired and/or wireless networks such as a local-area network (LAN), a wide-area network (WAN), a computer network, a wireless network, a telecommunications network, another like network or any combination thereof. For example, network 1243a may comprise a Wi-Fi network. Network connection interface 1211 may be configured to include a receiver and a transmitter interface used to communicate with one or more other devices over a communication network according to one or more communication protocols, such as Ethernet, TCP/IP, SONET, ATM, or the like. Network connection interface 1211 may implement receiver and transmitter functionality appropriate to the communication network links (e.g., optical, electrical, and the like). The transmitter and receiver functions may share circuit components, software or firmware, or alternatively may be implemented separately.

RAM 1217 may be configured to interface via bus 1202 to processing circuitry 1201 to provide storage or caching of data or computer instructions during the execution of software programs such as the operating system, application programs, and device drivers. ROM 1219 may be configured to provide computer instructions or data to processing circuitry 1201. For example, ROM 1219 may be configured to store invariant low-level system code or data for basic system functions such as basic input and output (I/O), startup, or reception of keystrokes from a keyboard that are stored in a non-volatile memory. Storage medium 1221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1221 may be configured to include operating system 1223, application program 1225 such as a web browser application, a widget or gadget engine or another application, and data file 1227. Storage medium 1221 may store, for use by UE 1200, any of a variety of various operating systems or combinations of operating systems.

Storage medium 1221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1221 may allow UE 1200 to access computer-executable instructions, application programs or the like, stored on transitory or non-transitory memory media, to off-load data, or to upload data. An article of manufacture, such as one utilizing a communication system may be tangibly embodied in storage medium 1221, which may comprise a device readable medium.

In Figure 10, processing circuitry 1201 may be configured to communicate with network 1243b using communication subsystem 1231. Network 1243a and network 1243b may be the same network or networks or different network or networks. Communication subsystem 1231 may be configured to include one or more transceivers used to communicate with network 1243b. For example, communication subsystem 1231 may be configured to include one or more transceivers used to communicate with one or more remote transceivers of another device capable of wireless communication such as another WD, UE, or base station of a radio access network (RAN) according to one or more communication protocols, such as IEEE 802.12, CDMA, WCDMA, GSM, LTE, UTRAN, WiMax, or the like. Each transceiver may include transmitter 1233 and/or receiver 1235 to implement transmitter or receiver functionality, respectively, appropriate to the RAN links (e.g., frequency allocations and the like). Further, transmitter 1233 and receiver 1235 of each transceiver may share circuit components, software or firmware, or alternatively may be implemented separately.

In the illustrated embodiment, the communication functions of communication subsystem 1231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1231 may include cellular communication, Wi-Fi communication, Bluetooth communication, and GPS communication. Network 1243b may encompass wired and/or wireless networks such as a local-area network (LAN), a wide-area network (WAN), a computer network, a wireless network, a telecommunications network, another like network or any combination thereof. For example, network 1243b may be a cellular network, a Wi-Fi network, and/or a near-field network. Power source 1213 may be configured to provide alternating current (AC) or direct current (DC) power to components of UE 1200.

The features, benefits and/or functions described herein may be implemented in one of the components of UE 1200 or partitioned across multiple components of UE 1200. Further, the features, benefits, and/or functions described herein may be implemented in any combination of hardware, software or firmware. In one example, communication subsystem 1231 may be configured to include any of the components described herein. Further, processing circuitry 1201 may be configured to communicate with any of such components over bus 1202. In another example, any of such components may be represented by program instructions stored in memory that when executed by processing circuitry 1201 perform the corresponding functions described herein. In another example, the functionality of any of such components may be partitioned between processing circuitry 1201 and communication subsystem 1231. In another example, the non-computationally intensive functions of any of such components may be implemented in software or firmware and the computationally intensive functions may be implemented in hardware.

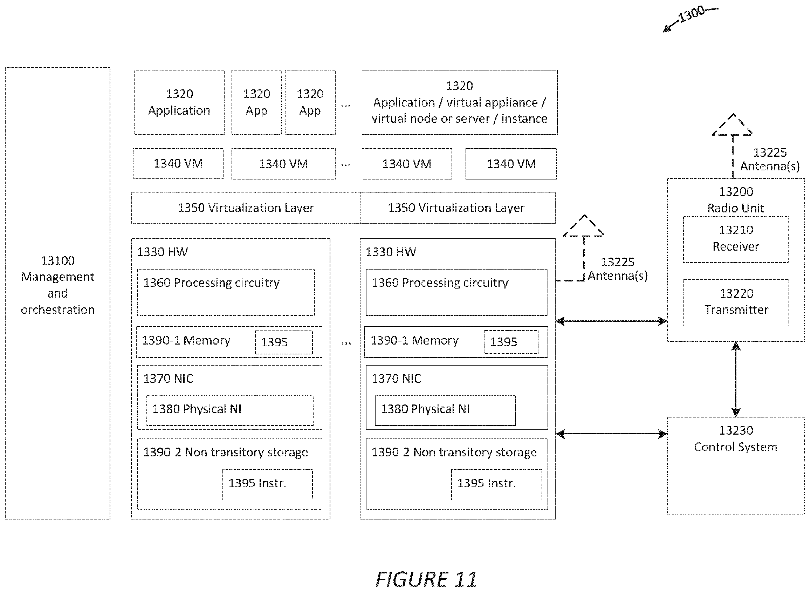

Figure 11 is a schematic block diagram illustrating a virtualization environment 1300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio base station) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1300 hosted by one or more of hardware nodes 1330. Further, in embodiments in which the virtual node is not a radio base station or does not require radio connectivity (e.g., a core network node), then the network node may be entirely virtualized.

The functions may be implemented by one or more applications 1320 (which may alternatively be called software instances, virtual appliances, network functions, virtual nodes, virtual network functions, etc.) operative to implement some of the features, functions, and/or benefits of some of the embodiments disclosed herein. Applications 1320 are run in virtualization environment 1300 which provides hardware 1330 comprising processing circuitry 1360 and memory 1390. Memory 1390 contains instructions 1395 executable by processing circuitry 1360 whereby application 1320 is operative to provide one or more of the features, benefits, and/or functions disclosed herein.

Virtualization environment 1300, comprises general-purpose or special-purpose network hardware devices 1330 comprising a set of one or more processors or processing circuitry 1360, which may be commercial off-the-shelf (COTS) processors, dedicated Application Specific Integrated Circuits (ASICs), or any other type of processing circuitry including digital or analog hardware components or special purpose processors. Each hardware device may comprise memory 1390-1 which may be non-persistent memory for temporarily storing instructions 1395 or software executed by processing circuitry 1360. Each hardware device may comprise one or more network interface controllers (NICs) 1370, also known as network interface cards, which include physical network interface 1380. Each hardware device may also include non-transitory, persistent, machine-readable storage media 1390-2 having stored therein software 1395 and/or instructions executable by processing circuitry 1360. Software 1395 may include any type of software including software for instantiating one or more virtualization layers 1350 (also referred to as hypervisors), software to execute virtual machines 1340 as well as software allowing it to execute functions, features and/or benefits described in relation with some embodiments described herein.

Virtual machines 1340, comprise virtual processing, virtual memory, virtual networking or interface and virtual storage, and may be run by a corresponding virtualization layer 1350 or hypervisor. Different embodiments of the instance of virtual appliance 1320 may be implemented on one or more of virtual machines 1340, and the implementations may be made in different ways.

During operation, processing circuitry 1360 executes software 1395 to instantiate the hypervisor or virtualization layer 1350, which may sometimes be referred to as a virtual machine monitor (VMM). Virtualization layer 1350 may present a virtual operating platform that appears like networking hardware to virtual machine 1340.

As shown in Figure 11, hardware 1330 may be a standalone network node with generic or specific components. Hardware 1330 may comprise antenna 13225 and may implement some functions via virtualization. Alternatively, hardware 1330 may be part of a larger cluster of hardware (e.g., such as in a data center or customer premise equipment (CPE)) where many hardware nodes work together and are managed via management and orchestration (MANO) 13100, which, among others, oversees lifecycle management of applications 1320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1340 may be a software implementation of a physical machine that runs programs as if they were executing on a physical, non-virtualized machine. Each of virtual machines 1340, and that part of hardware 1330 that executes that virtual machine, be it hardware dedicated to that virtual machine and/or hardware shared by that virtual machine with others of the virtual machines 1340, forms a separate virtual network elements (VNE).

Still in the context of NFV, Virtual Network Function (VNF) is responsible for handling specific network functions that run in one or more virtual machines 1340 on top of hardware networking infrastructure 1330 and corresponds to application 1320 in Figure 11.

In some embodiments, one or more radio units 13200 that each include one or more transmitters 13220 and one or more receivers 13210 may be coupled to one or more antennas 13225. Radio units 13200 may communicate directly with hardware nodes 1330 via one or more appropriate network interfaces and may be used in combination with the virtual components to provide a virtual node with radio capabilities, such as a radio base station or a base station.

In some embodiments, some signaling can be affected with the use of control system 13230 which may alternatively be used for communication between the hardware nodes 1330 and radio units 13200.

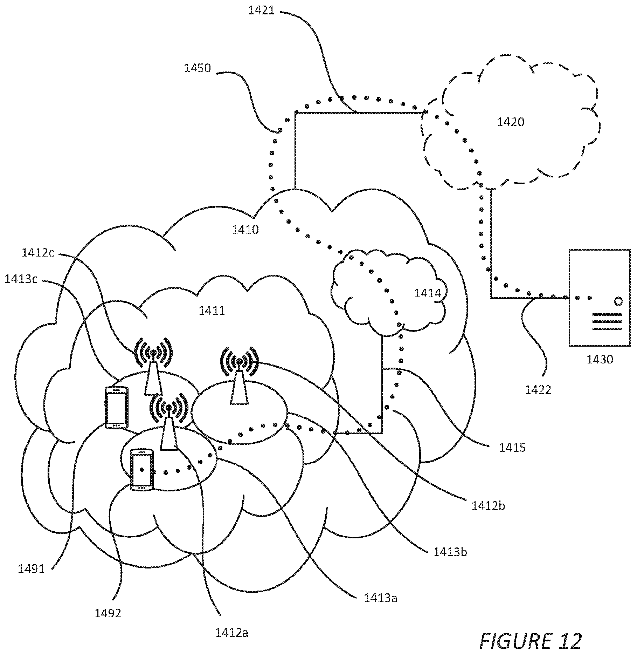

Figure 12 illustrates a telecommunication network connected via an intermediate network to a host computer in accordance with some embodiments. In particular, with reference to Figure 12, in accordance with an embodiment, a communication system includes telecommunication network 1410, such as a 3GPP-type cellular network, which comprises access network 1411, such as a radio access network, and core network 1414. Access network 1411 comprises a plurality of base stations 1412a, 1412b, 1412c, such as NBs, eNBs, gNBs or other types of wireless access points, each defining a corresponding coverage area 1413a, 1413b, 1413c. Each base station 1412a, 1412b, 1412c is connectable to core network 1414 over a wired or wireless connection 1415. A first UE 1491 located in coverage area 1413c is configured to wirelessly connect to, or be paged by, the corresponding base station 1412c. A second UE 1492 in coverage area 1413a is wirelessly connectable to the corresponding base station 1412a. While a plurality of UEs 1491, 1492 are illustrated in this example, the disclosed embodiments are equally applicable to a situation where a sole UE is in the coverage area or where a sole UE is connecting to the corresponding base station 1412.

Telecommunication network 1410 is itself connected to host computer 1430, which may be embodied in the hardware and/or software of a standalone server, a cloud-implemented server, and a distributed server or as processing resources in a server farm. Host computer 1430 may be under the ownership or control of a service provider or may be operated by the service provider or on behalf of the service provider. Connections 1421 and 1422 between telecommunication network 1410 and host computer 1430 may extend directly from core network 1414 to host computer 1430 or may go via an optional intermediate network 1420. Intermediate network 1420 may be one of, or a combination of more than one of, a public, private or hosted network; intermediate network 1420, if any, may be a backbone network or the Internet; in particular, intermediate network 1420 may comprise two or more sub-networks (not shown).

The communication system of Figure 12 as a whole enables connectivity between the connected UEs 1491, 1492 and host computer 1430. The connectivity may be described as an over-the-top (OTT) connection 1450. Host computer 1430 and the connected UEs 1491, 1492 are configured to communicate data and/or signaling via OTT connection 1450, using access network 1411, core network 1414, any intermediate network 1420 and possible further infrastructure (not shown) as intermediaries. OTT connection 1450 may be transparent in the sense that the participating communication devices through which OTT connection 1450 passes are unaware of routing of uplink and downlink communications. For example, base station 1412 may not or need not be informed about the past routing of an incoming downlink communication with data originating from host computer 1430 to be forwarded (e.g., handed over) to a connected UE 1491. Similarly, base station 1412 need not be aware of the future routing of an outgoing uplink communication originating from the UE 1491 towards the host computer 1430.

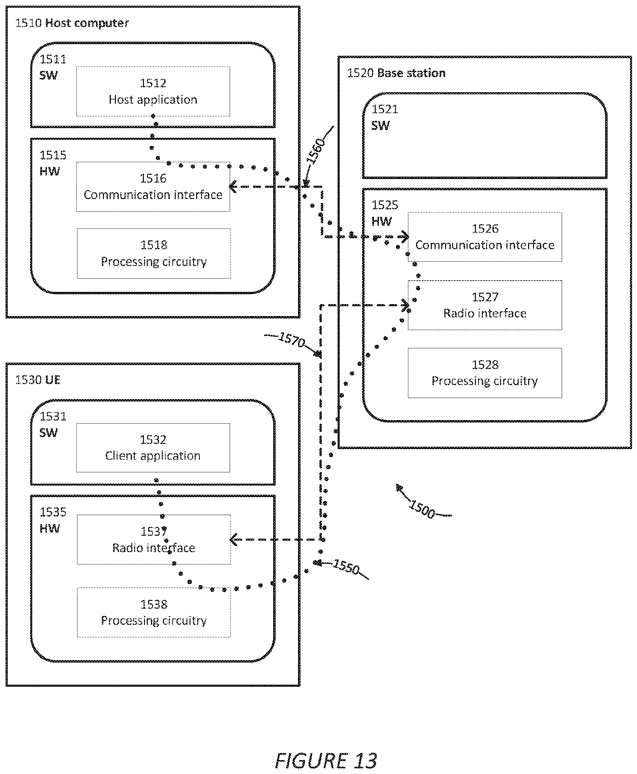

Example implementations, in accordance with an embodiment, of the UE, base station and host computer discussed in the preceding paragraphs will now be described with reference to Figure 13. Figure 13 illustrates host computer communicating via a base station with a user equipment over a partially wireless connection in accordance with some embodiments In communication system 1500, host computer 1510 comprises hardware 1515 including communication interface 1516 configured to set up and maintain a wired or wireless connection with an interface of a different communication device of communication system 1500. Host computer 1510 further comprises processing circuitry 1518, which may have storage and/or processing capabilities. In particular, processing circuitry 1518 may comprise one or more programmable processors, application-specific integrated circuits, field programmable gate arrays or combinations of these (not shown) adapted to execute instructions. Host computer 1510 further comprises software 1511, which is stored in or accessible by host computer 1510 and executable by processing circuitry 1518. Software 1511 includes host application 1512. Host application 1512 may be operable to provide a service to a remote user, such as UE 1530 connecting via OTT connection 1550 terminating at UE 1530 and host computer 1510. In providing the service to the remote user, host application 1512 may provide user data which is transmitted using OTT connection 1550.

Communication system 1500 further includes base station 1520 provided in a telecommunication system and comprising hardware 1525 enabling it to communicate with host computer 1510 and with UE 1530. Hardware 1525 may include communication interface 1526 for setting up and maintaining a wired or wireless connection with an interface of a different communication device of communication system 1500, as well as radio interface 1527 for setting up and maintaining at least wireless connection 1570 with UE 1530 located in a coverage area (not shown in Figure 13) served by base station 1520. Communication interface 1526 may be configured to facilitate connection 1560 to host computer 1510. Connection 1560 may be direct or may pass through a core network (not shown in Figure 13) of the telecommunication system and/or through one or more intermediate networks outside the telecommunication system. In the embodiment shown, hardware 1525 of base station 1520 further includes processing circuitry 1528, which may comprise one or more programmable processors, application-specific integrated circuits, field programmable gate arrays or combinations of these (not shown) adapted to execute instructions. Base station 1520 further has software 1521 stored internally or accessible via an external connection.

Communication system 1500 further includes UE 1530 already referred to. It's hardware 1535 may include radio interface 1537 configured to set up and maintain wireless connection 1570 with a base station serving a coverage area in which UE 1530 is currently located. Hardware 1535 of UE 1530 further includes processing circuitry 1538, which may comprise one or more programmable processors, application-specific integrated circuits, field programmable gate arrays or combinations of these (not shown) adapted to execute instructions. UE 1530 further comprises software 1531, which is stored in or accessible by UE 1530 and executable by processing circuitry 1538. Software 1531 includes client application 1532. Client application 1532 may be operable to provide a service to a human or non-human user via UE 1530, with the support of host computer 1510. In host computer 1510, an executing host application 1512 may communicate with the executing client application 1532 via OTT connection 1550 terminating at UE 1530 and host computer 1510. In providing the service to the user, client application 1532 may receive request data from host application 1512 and provide user data in response to the request data. OTT connection 1550 may transfer both the request data and the user data. Client application 1532 may interact with the user to generate the user data that it provides.

It is noted that host computer 1510, base station 1520 and UE 1530 illustrated in Figure 13 may be similar or identical to host computer 1430, one of base stations 1412a, 1412b, 1412c and one of UEs 1491, 1492 of Figure 12, respectively. This is to say, the inner workings of these entities may be as shown in Figure 13 and independently, the surrounding network topology may be that of Figure 12.

In Figure 13, OTT connection 1550 has been drawn abstractly to illustrate the communication between host computer 1510 and UE 1530 via base station 1520, without explicit reference to any intermediary devices and the precise routing of messages via these devices. Network infrastructure may determine the routing, which it may be configured to hide from UE 1530 or from the service provider operating host computer 1510, or both. While OTT connection 1550 is active, the network infrastructure may further take decisions by which it dynamically changes the routing (e.g., on the basis of load balancing consideration or reconfiguration of the network).

Wireless connection 1570 between UE 1530 and base station 1520 is in accordance with the teachings of the embodiments described throughout this disclosure. One or more of the various embodiments improve the performance of OTT services provided to UE 1530 using OTT connection 1550, in which wireless connection 1570 forms the last segment. More precisely, the teachings of these embodiments may reduce power consumption in MTC devices and thereby provide benefits such as longer service life for MTC devices without replacement or change of batteries.

A measurement procedure may be provided for the purpose of monitoring data rate, latency and other factors on which the one or more embodiments improve. There may further be an optional network functionality for reconfiguring OTT connection 1550 between host computer 1510 and UE 1530, in response to variations in the measurement results. The measurement procedure and/or the network functionality for reconfiguring OTT connection 1550 may be implemented in software 1511 and hardware 1515 of host computer 1510 or in software 1531 and hardware 1535 of UE 1530, or both. In embodiments, sensors (not shown) may be deployed in or in association with communication devices through which OTT connection 1550 passes; the sensors may participate in the measurement procedure by supplying values of the monitored quantities exemplified above, or supplying values of other physical quantities from which software 1511, 1531 may compute or estimate the monitored quantities. The reconfiguring of OTT connection 1550 may include message format, retransmission settings, preferred routing etc.; the reconfiguring need not affect base station 1520, and it may be unknown or imperceptible to base station 1520. Such procedures and functionalities may be known and practiced in the art. In certain embodiments, measurements may involve proprietary UE signaling facilitating host computer 1510's measurements of throughput, propagation times, latency and the like. The measurements may be implemented in that software 1511 and 1531 causes messages to be transmitted, in particular empty or 'dummy' messages, using OTT connection 1550 while it monitors propagation times, errors etc.

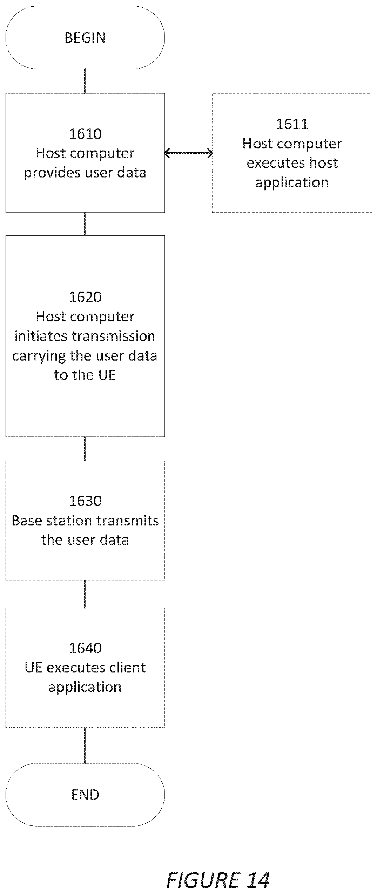

Figure 14 is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 14 will be included in this section. In step 1610, the host computer provides user data. In substep 1611 (which may be optional) of step 1610, the host computer provides the user data by executing a host application. In step 1620, the host computer initiates a transmission carrying the user data to the UE. In step 1630 (which may be optional), the base station transmits to the UE the user data which was carried in the transmission that the host computer initiated, in accordance with the teachings of the embodiments described throughout this disclosure. In step 1640 (which may also be optional), the UE executes a client application associated with the host application executed by the host computer.

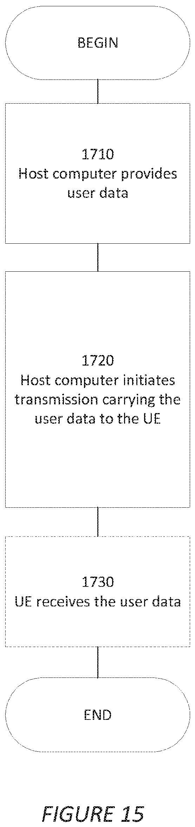

Figure 15 is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 15 will be included in this section. In step 1710 of the method, the host computer provides user data. In an optional substep (not shown) the host computer provides the user data by executing a host application. In step 1720, the host computer initiates a transmission carrying the user data to the UE. The transmission may pass via the base station, in accordance with the teachings of the embodiments described throughout this disclosure. In step 1730 (which may be optional), the UE receives the user data carried in the transmission.

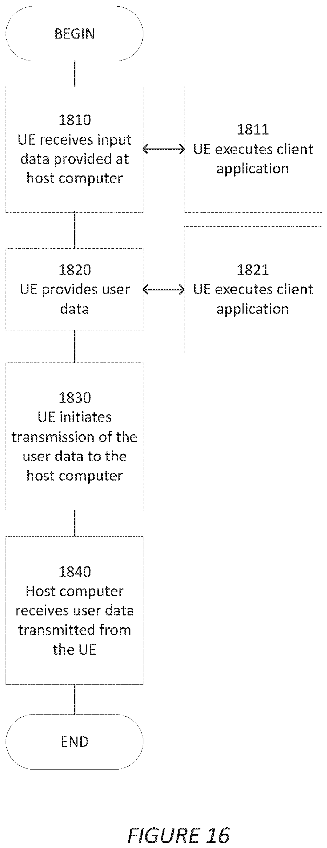

Figure 16 is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 16 will be included in this section. In step 1810 (which may be optional), the UE receives input data provided by the host computer. Additionally, or alternatively, in step 1820, the UE provides user data. In substep 1821 (which may be optional) of step 1820, the UE provides the user data by executing a client application. In substep 1811 (which may be optional) of step 1810, the UE executes a client application which provides the user data in reaction to the received input data provided by the host computer. In providing the user data, the executed client application may further consider user input received from the user. Regardless of the specific manner in which the user data was provided, the UE initiates, in substep 1830 (which may be optional), transmission of the user data to the host computer. In step 1840 of the method, the host computer receives the user data transmitted from the UE, in accordance with the teachings of the embodiments described throughout this disclosure.

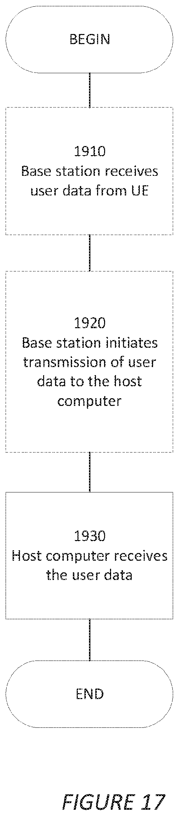

Figure 17 is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 17 will be included in this section. In step 1910 (which may be optional), in accordance with the teachings of the embodiments described throughout this disclosure, the base station receives user data from the UE. In step 1920 (which may be optional), the base station initiates transmission of the received user data to the host computer. In step 1930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the description.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

## Claims

1. A method (250) implemented by a user equipment in a wireless communication network (100), said method (250) comprising:
transmitting (270), to a base station (110, 300), a dedicated random access preamble on a random access channel as a first part of a random access message; and
transmitting (280), to the base station (110, 300), a second part of the random access message using dedicated resources on an uplink shared channel, wherein the dedicated resources are associated with the dedicated random access preamble.

2. The method (250) of claim 1 further comprising receiving (260), from a base station (110, 300) in the wireless communication network (100), configuration information including an indication of the dedicated preamble.

3. The method (250) of claim 2 wherein the configuration information further includes a resource allocation for the dedicated resources.

4. The method (250) of claim 3 & wherein the indication of the dedicated preamble and the resource allocation for the dedicated resources are received in a same message.

5. The method (250) of claim 2 wherein the configuration information further comprises mapping information for a dedicated preamble to resource mapping associating the dedicated preamble with the dedicated resources on the uplink shared channel.

6. The method (250) of any one of claims 2 - 5 wherein the configuration information further comprises an indication to use a two-step random access procedure.

7. The method (250) of claim 6 wherein the indication to use a two-step random access procedure is an explicit indication, or wherein the indication to use a two-step random access procedure is indicated implicitly by an indication of a dedicated two-step random access preamble.

8. The method (250) of any one of claims 2 - 7 wherein at least a portion of configuration information is received from the base station (110, 300) in a handover command and/or in a radio resource control message.

9. The method (250) of any one of claims 1-8 further comprising receiving, from the base station (110, 300), transmission parameters for use in transmitting the second part of the random access message on the uplink shared channel.

10. A method (200) implemented by a base station (110, 300) in a wireless communication network (100) of supporting random access, said method (200) comprising:
transmitting (210), to a user equipment, configuration information including an indication of a dedicated preamble for a contention-free random access;
wherein the dedicated preamble comprises a first part of a random access message to be transmitted by the UE (120, 400); and
wherein the dedicated preamble is associated with dedicated resources on a shared uplink channel for transmission of a second part of the random access message.

11. The method (200) of claim 10 wherein the configuration information further includes a resource allocation for the dedicated resources.

12. The method (200) of claim 11 wherein the indication of the dedicated preamble and the resource allocation for the dedicated resources are received in a same message.

13. The method (200) of claim 10 wherein the configuration information further comprises mapping information for a dedicated preamble to resource mapping associating the dedicated preamble with the dedicated resources on the uplink shared channel.

14. The method (200) of any one of claims 10 - 13 wherein the configuration information further comprises an indication to use a two-step random access procedure.

15. The method (200) of claim 14 wherein the indication to use a two-step random access procedure is an explicit indication, or wherein the indication to use a two-step random access procedure is indicated implicitly by an indication of a dedicated two step random access preamble.

16. The method (200) of any one of claims 10 - 15 wherein at least a portion of configuration information is transmitted to the UE in a handover command and/or in a radio resource control message.

17. The method (200) of any one of claims 10 - 16 further comprising transmitting (220), to the UE, transmission parameters for use in transmitting the second part of the random access message on the uplink shared channel.

18. A user equipment for a wireless communication network (100), said user equipment configured to:
transmit, to a base station (110, 300), a dedicated random access preamble on a random access channel as a first part of a random access message; and the user equipment further configured to:
transmit, to the base station (110, 300), a second part of the random access message using dedicated resources on an uplink shared channel associated with the dedicated random access preamble.

19. A base station (110, 300) for a wireless communication network (100), said base station (110, 300) configured to:
transmit, to a user equipment, configuration information including an indication of a dedicated preamble for a contention-free random access;
wherein the dedicated preamble comprises a first part of a random access message to be transmitted by the UE (120, 400); and
wherein the dedicated preamble is associated with dedicated resources on a shared uplink channel for transmission of a second part of the random access message.

## Patentansprüche

1. Verfahren (250), das von einer Benutzereinrichtung, UE, in einem Drahtloskommunikationsnetzwerk (100) implementiert wird, wobei das Verfahren (250) umfasst:
Senden (270) einer dedizierten Direktzugriffspräambel auf einem Direktzugriffskanal als ersten Teil einer Direktzugriffsnachricht an eine Basisstation (110, 300); und
Senden (280) eines zweiten Teils der Direktzugriffsnachricht unter Verwendung dedizierter Ressourcen auf einem gemeinsamen Uplink-Kanal an die Basisstation (110, 300), wobei die dedizierten Ressourcen mit der dedizierten Direktzugriffspräambel assoziiert sind.

2. Verfahren (250) nach Anspruch 1, ferner umfassend ein Empfangen (260) von Konfigurationsinformationen, die eine Anzeige der dedizierten Präambel umfassen, von einer Basisstation (110, 300) im Drahtloskommunikationssystem (100).

3. Verfahren (250) nach Anspruch 2, wobei die Konfigurationsinformationen ferner eine Ressourcenzuweisung für die dedizierten Ressourcen umfassen.

4. Verfahren (250) nach Anspruch 3, wobei die Anzeige der dedizierten Präambel und die Ressourcenzuweisung für die dedizierten Ressourcen in einer gleichen Nachricht empfangen werden.

5. Verfahren (250) nach Anspruch 2, wobei die Konfigurationsinformationen ferner Zuordnungsinformationen für eine dedizierte Präambel zur Ressourcenzuordnung umfassen, die die dedizierte Präambel mit den dedizierten Ressourcen auf dem gemeinsam Uplink-Kanal assoziiert.

6. Verfahren (250) nach einem der Ansprüche 2 bis 5, wobei die Konfigurationsinformationen ferner eine Anzeige, eine zweistufige Direktzugriffsprozedur zu verwenden, umfassen.

7. Verfahren (250) nach Anspruch 6, wobei die Anzeige, eine zweistufige Direktzugriffsprozedur zu verwenden, eine explizite Anzeige ist, oder wobei die Anzeige, eine zweistufige Direktzugriffsprozedur zu verwenden, durch eine Anzeige einer dedizierten Präambel eines zweistufigen Direktzugriffs implizit angezeigt wird.

8. Verfahren (250) nach einem der Ansprüche 2 bis 7, wobei zumindest ein Teil der Konfigurationsinformationen in einem Handover-Befehl und/oder in einer Funkressourcensteuernachricht von der Basisstation (110, 300) empfangen wird.

9. Verfahren (250) nach einem der Ansprüche 1 bis 8, ferner umfassend ein Empfangen von Übertragungsparametern von der Basisstation (110, 300) zur Verwendung beim Senden des zweiten Teils der Direktzugriffsnachricht auf dem gemeinsamen Uplink-Kanal.

10. Verfahren (200), das von einer Basisstation (110, 300) in einem Drahtloskommunikationsnetzwerk (100) implementiert wird, zur Unterstützung von Direktzugriff, wobei das Verfahren (200) umfasst:
Senden (210) von Konfigurationsinformationen, die eine Anzeige einer dedizierten Präambel für einen konfliktfreien Direktzugriff umfassen, an eine Benutzereinrichtung;
wobei die dedizierte Präambel einen ersten Teil einer Direktzugriffsnachricht umfasst, die von der UE (120, 400) gesendet werden soll; und
wobei die dedizierte Präambel mit dedizierten Ressourcen auf einem gemeinsamen Uplink-Kanal zur Übertragung eines zweiten Teils der Direktzugriffsnachricht assoziiert ist.

11. Verfahren (200) nach Anspruch 10, wobei die Konfigurationsinformationen ferner eine Ressourcenzuweisung für die dedizierten Ressourcen umfassen.

12. Verfahren (200) nach Anspruch 11, wobei die Anzeige der dedizierten Präambel und die Ressourcenzuweisung für die dedizierten Ressourcen in einer gleichen Nachricht empfangen werden.

13. Verfahren (200) nach Anspruch 10, wobei die Konfigurationsinformationen ferner Zuordnungsinformationen für eine dedizierte Präambel zur Ressourcenzuordnung umfassen, die die dedizierte Präambel mit den dedizierten Ressourcen auf dem gemeinsam Uplink-Kanal assoziiert.

14. Verfahren (200) nach einem der Ansprüche 10 bis 13, wobei die Konfigurationsinformationen ferner eine Anzeige, eine zweistufige Direktzugriffsprozedur zu verwenden, umfassen.

15. Verfahren (200) nach Anspruch 14, wobei die Anzeige, eine zweistufige Direktzugriffsprozedur zu verwenden, eine explizite Anzeige ist, oder wobei die Anzeige, eine zweistufige Direktzugriffsprozedur zu verwenden, durch eine Anzeige einer dedizierten Präambel eines zweistufigen Direktzugriffs implizit angezeigt wird.

16. Verfahren (200) nach einem der Ansprüche 10 bis 15, wobei zumindest ein Teil der Konfigurationsinformationen in einem Handover-Befehl und/oder in einer Funkressourcensteuernachricht an die UE gesendet wird.

17. Verfahren (200) nach einem der Ansprüche 10 bis 16, ferner umfassend ein Senden (220) von Übertragungsparametern an die UE zur Verwendung beim Senden des zweiten Teils der Direktzugriffsnachricht auf dem gemeinsamen Uplink-Kanal.

18. Benutzereinrichtung für ein Drahtloskommunikationsnetzwerk (100), wobei die Benutzereinrichtung konfiguriert ist zum:
Senden einer dedizierten Direktzugriffspräambel auf einem Direktzugriffskanal als ersten Teil einer Direktzugriffsnachricht an eine Basisstation (110, 300); und
wobei die Benutzereinrichtung ferner konfiguriert ist zum:
Senden eines zweiten Teils der Direktzugriffsnachricht unter Verwendung dedizierter Ressourcen, die mit der dedizierten Direktzugriffspräambel assoziiert sind, auf einem gemeinsamen Uplink-Kanal an die Basisstation (110, 300).

19. Basisstation (110, 300) für ein Drahtloskommunikationsnetzwerk (100), wobei die Basisstation (110, 300) konfiguriert ist zum:
Senden von Konfigurationsinformationen, die eine Anzeige einer dedizierten Präambel für konfliktfreien Direktzugriff umfassen, an eine Benutzereinrichtung;
wobei die dedizierte Präambel einen ersten Teil einer Direktzugriffsnachricht umfasst, die von der UE (120, 400) gesendet werden soll; und
wobei die dedizierte Präambel mit dedizierten Ressourcen auf einem gemeinsamen Uplink-Kanal zur Übertragung eines zweiten Teils der Direktzugriffsnachricht assoziiert ist.

## Revendications

1. Procédé (250) mis en œuvre par un équipement utilisateur dans un réseau de communication sans fil (100), ledit procédé (250) comprenant :
la transmission (270), à une station de base (110, 300), d'un préambule d'accès aléatoire dédié sur un canal d'accès aléatoire en tant qu'une première partie d'un message d'accès aléatoire ; et
la transmission (280), à la station de base (110, 300), d'une deuxième partie du message d'accès aléatoire en utilisant des ressources dédiées sur un canal partagé de liaison montante, dans lequel les ressources dédiées sont associées au préambule d'accès aléatoire dédié.

2. Procédé (250) selon la revendication 1, comprenant en outre la réception (260), depuis une station de base (110, 300) dans le réseau de communication sans fil (100), d'informations de configuration incluant une indication du préambule dédié.

3. Procédé (250) selon la revendication 2, dans lequel les informations de configuration incluent en outre une allocation de ressources pour les ressources dédiées.

4. Procédé (250) selon la revendication 3, dans lequel l'indication du préambule dédié et l'allocation de ressources pour les ressources dédiées sont reçues dans un même message.

5. Procédé (250) selon la revendication 2, dans lequel les informations de configuration comprennent en outre des informations de mappage pour un mappage d'un préambule dédié avec des ressources dédiées associant le préambule dédié aux ressources dédiées sur le canal partagé de liaison montante.

6. Procédé (250) selon l'une quelconque des revendications 2 à 5, dans lequel les informations de configuration comprennent en outre une indication d'utiliser une procédure d'accès aléatoire en deux étapes.

7. Procédé (250) selon la revendication 6, dans lequel l'indication d'utiliser une procédure d'accès aléatoire en deux étapes est une indication explicite, ou dans lequel l'indication d'utiliser une procédure d'accès aléatoire en deux étapes est indiquée implicitement par une indication d'un préambule d'accès aléatoire en deux étapes dédié.

8. Procédé (250) selon l'une quelconque des revendications 2 à 7, dans lequel au moins une partie des informations de configuration est reçue depuis la station de base (110, 300) dans une instruction de transfert intercellulaire et/ou dans un message de commande de ressources radio.

9. Procédé (250) selon l'une quelconque des revendications 1 à 8, comprenant en outre la réception, depuis la station de base (110, 300), de paramètres de transmission à utiliser dans la transmission de la deuxième partie du message d'accès aléatoire sur le canal partagé de liaison montante.

10. Procédé (200), mis en œuvre par une station de base (110, 300) dans un réseau de communication sans fil (100), de prise en charge d'accès aléatoire, ledit procédé (200) comprenant :
la transmission (210), à un équipement utilisateur,
d'informations de configuration incluant une indication d'un préambule dédié pour un accès aléatoire sans contention ;
dans lequel le préambule dédié comprend une première partie d'un message d'accès aléatoire à transmettre par l'UE (120, 400) ; et
dans lequel le préambule dédié est associé à des ressources dédiées sur un canal de liaison montante partagé pour une transmission d'une deuxième partie du message d'accès aléatoire.

11. Procédé (200) selon la revendication 10, dans lequel les informations de configuration incluent en outre une allocation de ressources pour les ressources dédiées.

12. Procédé (200) selon la revendication 11, dans lequel l'indication du préambule dédié et l'allocation de ressources pour les ressources dédiées sont reçues dans un même message.

13. Procédé (200) selon la revendication 10, dans lequel les informations de configuration comprennent en outre des informations de mappage pour un mappage d'un préambule dédié avec des ressources dédiées associant le préambule dédié aux ressources dédiées sur le canal partagé de liaison montante.

14. Procédé (200) selon l'une quelconque des revendications 10 à 13, dans lequel les informations de configuration comprennent en outre une indication d'utiliser une procédure d'accès aléatoire en deux étapes.

15. Procédé (200) selon la revendication 14, dans lequel l'indication d'utiliser une procédure d'accès aléatoire en deux étapes est une indication explicite, ou dans lequel l'indication d'utiliser une procédure d'accès aléatoire en deux étapes est indiquée implicitement par une indication d'un préambule d'accès aléatoire en deux étapes dédié.

16. Procédé (200) selon l'une quelconque des revendications 10 à 15, dans lequel au moins une partie des informations de configuration est transmise à l'UE dans une instruction de transfert intercellulaire et/ou dans un message de commande de ressources radio.

17. Procédé (200) selon l'une quelconque des revendications 10 à 16, comprenant en outre la transmission (220), à l'UE, de paramètres de transmission à utiliser dans la transmission de la deuxième partie du message d'accès aléatoire sur le canal partagé de liaison montante.

18. Equipement utilisateur pour un réseau de communication sans fil (100), ledit équipement utilisateur étant configuré pour :
transmettre, à une station de base (110, 300), un préambule d'accès aléatoire dédié sur un canal d'accès aléatoire en tant qu'une première partie d'un message d'accès aléatoire ; et
l'équipement utilisateur étant en outre configuré pour :
transmettre, à la station de base (110, 300), une deuxième partie du message d'accès aléatoire en utilisant des ressources dédiées sur un canal partagé de liaison montante, qui sont associées au préambule d'accès aléatoire dédié.

19. Station de base (110, 300) pour un réseau de communication sans fil (100), ladite station de base (110, 300) étant configurée pour :
transmettre, à un équipement utilisateur, des informations de configuration incluant une indication d'un préambule dédié pour un accès aléatoire sans contention ;
dans laquelle le préambule dédié comprend une première partie d'un message d'accès aléatoire à transmettre par l'UE (120, 400) ; et
dans laquelle le préambule dédié est associé à des ressources dédiées sur un canal de liaison montante partagé pour une transmission d'une deuxième partie du message d'accès aléatoire.
